# EUROPEAN PATENT APPLICATION

(11) **EP 1 852 778 A2**
(43) Date of publication of application: **07.11.2007**
(21) Application number: 07106594.0
(22) Date of filing: 20.04.2007
(51) Int. Cl.: G06F 9/44

(54) **Apparatus and method for generating DSP code using combination of software modules**

(30) Priority: 03.05.2006 KR 20060040046
(71) Applicant: SAMSUNG ELECTRONICS CO., LTD., Suwon-si Gyeonggi-do 442-742 (KR)
(72) Inventor: Choo, Joung-hoon, Gwanak-gu Seoul (KR); Kim, Jae-woo, Anyang-si Gyeonggi-do (KR); Ko, Jae-woo, Uiwang-si Gyeonggi-do (KR); Park, Sang-do, Gangbam-gu Seoul (KR); Yoon, Jung-min, Seoul (KR)
(74) Representative: Brandon, Paul Laurence

(57) **Abstract**

Provided are an apparatus and method for generating DSP code using a combination of software modules, more particularly, an apparatus and method for generating a DSP code by receiving and combining desired modules. The apparatus includes a storage unit (130) that stores one or more software modules, a DSP-code generator (140) that combines the stored software modules, and generates DSP code executing multimedia content, and a DSP-processing unit (150) that decodes and processes the generated DSP code.

## Description

Apparatuses and methods consistent with the present invention relate to generating a digital signal processor (DSP) code using a combination of software modules.

Currently, a variety of codecs are being developed for broadcasting, telecommunications, and the Internet. In addition, due to enhanced compression ratios and extendibility, content providers and network providers are attempting to use various codecs.

Accordingly, a number of attempts have been made to implement a media decoder using a DSP in order to apply various media formats to digital televisions (DTVs), set-top boxes, and rendering devices. In addition, various codecs have been applied by having different software run in the DSP.

Generally, a pipeline arithmetic unit is arranged in the DSP in order to achieve high-speed performance. Especially, since the DSP is mainly used in a fields requiring real-time processing, the software should be implemented in such a way that hardware is utilized to its fullest extent.

The process of developing DSP programs is carried out in the following order. First, a prototype is set on a host computer, and a DSP program is developed on the host computer. Then, debugging is executed in the DSP. Here, exclusive software and hardware-development tools are available for each step, and thus efficient program-development and debugging are carried out.

First, a signal processing algorithm is verified when developing a DSP program (a prototype program).

Second, the DSP program can execute the program by creating a loadable module on the host computer, and downloading the module to the DSP. Here, the biggest difference between the software-development tool and a microprocessor is that a processor that is used to develop the program is distinct from a processor that runs the program.

Third, a debugger must have functions to run a program in the DSP, observe its output, and stop the software in order to debug the software. Such functions can be implemented in a device called an in-circuit emulator or an online-debug.

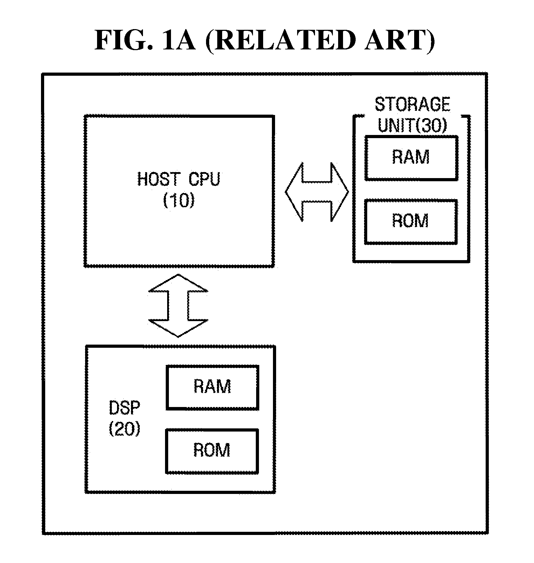

FIG. 1A illustrates a configuration of a related art DSP-based rendering device.

Referring to FIG. 1A, the rendering device includes a host central processing unit (CPU) 10, a DSP 20, and a storage unit 30 (e.g., a ROM and a RAM).

First, the DSP 20 may read DSP code from the storage unit 30, and execute the software when booting the DSP 20. In contrast, the host CPU 10 may load a execute code in the DSP 20, and boot the DSP 20.

Next, since DSP-based decoding devices have different DSP code depending on the codec(s) used, i.e., the DSP to be executed is different depending on the codec, the host CPU 10 downloads DSP code to the DSP 20.

The rendering device may not include the host CPU 10. In this case, the DSP 20 reads the DSP code from the storage unit 30, and executes the software.

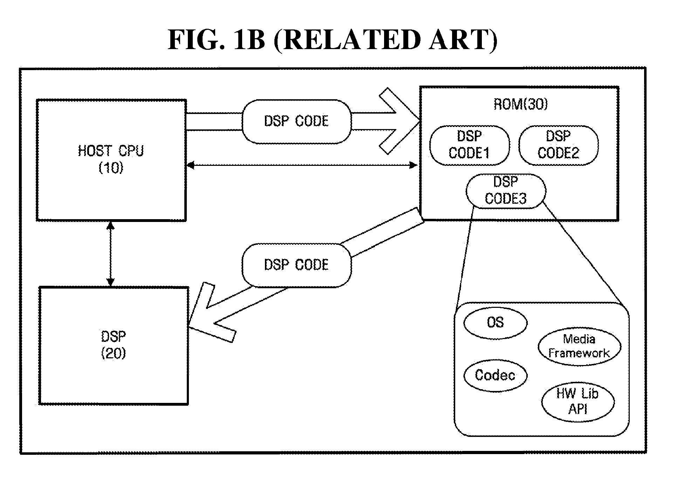

FIG. 1B illustrates a process of transmitting and downloading a related art DSP codec.

Referring to FIG. 1B, a variety of DSP codecs such as the H.264 codec DSP and the MPEG-2 codec DSP may exist in the ROM 30 of the host CPU 10. Here, the DSP code stored in the ROM 30 is loaded into the DSP 20 when it is booted.

When a desired DSP codec does not exist in the ROM 30, a corresponding DSP codec is downloaded from a codec server via a network, and is stored in the ROM 30 so the codec can be used whenever needed.

The DSP code, compared with a personal computer (PC) program, has minimal operating conditions. That is, codec software that has been implemented for the DSP 20 (e.g., an operating system (OS), a codec library, a media framework, and a hardware library) is DSP code as opposed to an application program running on an OS. Accordingly, the DSP code must be loaded into the DSP 20 every time the codec is changed.

The codec library is changed in the DSP code downloaded from the remote server via the network, while the OS, the media framework, and the hardware library are shared among other DSP programs stored in the ROM 30, and transmitted including an unnecessary software module. Accordingly, network overhead occurs when downloading the DSP code and significant ROM memory is required.

Korean Unexamined Publication No. 1999-082772 discloses a programmable digital signal processor that processes digital broadcasting signals in different formats by having a host CPU read a program that processes digital signals according to user input from a ROM, and supply the signals to a DSP circuit. However, the above invention does not disclose a technique for generating DSP code by downloading and combining desired software modules. Exemplary embodiments of the present invention aim to overcome the above disadvantages and other disadvantages not described above. Also, the present invention is not required to overcome the disadvantages described above, and an exemplary embodiment of the present invention may not overcome any of the problems described above.

Preferred embodiments of the present invention aim to provide an apparatus and method for generating DSP code by receiving and combining desired software modules (e.g. a codec library) from a codec server located in an external network.

According to an aspect of the present invention, there is provided an apparatus for generating DSP code using a combination of software modules, the apparatus including a storage unit that stores one or more software modules, a DSP-code generator that combines the stored software modules, and generates DSP code executing multimedia content, and a DSP-processing unit that decodes and processes the generated DSP code.

According to another aspect of the present invention, there is provided a method of generating DSP code using a combination of software modules, the method including requesting the DSP code to play multimedia content, determining whether a codec library playing the multimedia content exists, generating the DSP code using a combination of the codec library and other software modules if it is determined that the codec library exists, and playing the multimedia content by decoding the generated DSP.

Further features of the present invention are set out in the appended claims.

The present invention will become more apparent by describing in detail exemplary embodiments thereof with reference to the attached drawings, in which:
FIG. 1A illustrates a configuration of a related art DSP-based rendering device;
FIG. 1B illustrates a process of transmitting and downloading a related art DSP codec;
FIG. 2 is a block diagram illustrating the interior of an apparatus for generating DSP code using a combination of software modules according to an exemplary embodiment of the present invention;
FIG. 3 illustrates an apparatus for generating DSP code by combining software modules according to an embodiment of the present invention;
FIG. 4 illustrates a data packet that receives codec information on multimedia content in an apparatus for generating DSP code using a combination of software modules according to another exemplary embodiment of the present invention; and
FIG. 5 is a flow chart illustrating a method of generating DSP code using a combination of software modules according to another exemplary embodiment of the present invention.

Exemplary embodiments of the present invention will be described in detail with reference to the accompanying drawings.

Features of the present invention and methods of accomplishing the same may be understood more readily by reference to the following detailed description of the exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

The present invention is described hereinafter with reference to flowchart illustrations of user interfaces, methods, and computer program products according to exemplary embodiments of the invention.

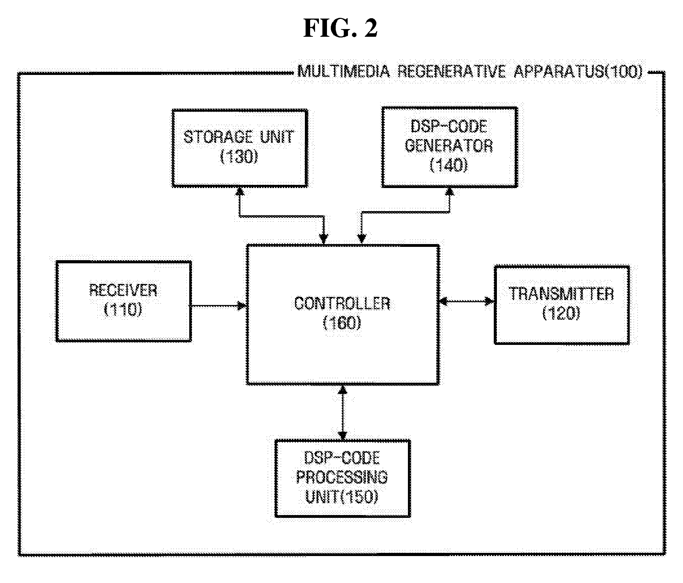

FIG. 2 is a block diagram illustrating the interior of an apparatus for generating DSP code using a combination of software modules according to an exemplary embodiment of the present invention. Here, a multimedia player 100 plays broadcasting content or moving pictures, and refers to, for example, a DTV, a set-top box, or a mobile terminal.

Referring to FIG. 2, the multimedia player 100 includes a receiver 110, a transmitter 120, a storage unit 130, a DSP-code generator 140, a DSP-code processing unit 150, and a controller 160.

Here, the term "module" means, but is not limited to, a software or hardware component, such as a Field Programmable Gate Array (FPGA) or an Application Specific Integrated Circuit (ASIC), which executes certain tasks. A module may advantageously be configured to reside in the addressable storage medium, and configured to be executed on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

The receiver 100 receives a software module transmitted from a codec server from an external network. Here, the software module includes an OS, a codec library, a media framework, and a hardware library, and code consisting thereof is called DSP code. The codec may be the MPEG-2, MPEG-4, H.264, or the VC1 codec. That is, the received codec libraries are, for example, the MPEG-2 library and the H.264 library.

The transmitter 120 transmits a codec-request message to the codec server in the external network requesting download of a codec library.

The storage unit 130 stores at least one of the software modules in order to execute an operation of the multimedia content. Here, the storage unit 130 includes a hard disk drive (HDD) and a flash ROM.

The DSP-code generator 140 generates DSP code that plays multimedia content, i.e., it generates a single DSP using a combination of software modules stored in the storage unit 130.

For example, if DSP code supporting MPEG-2 is needed, the DSP-code generator 14 generates the DSP code using a combination of the MPEG-2 library, the OS, the media framework, and the hardware library. Accordingly, the generated DSP code is a MPEG-2 DSP code.

The DSP-code processing unit 150 processes the DSP code generated by the DSP-code generator 140. That is, the DSP- code processing unit 150 decodes the DSP code, and executes the corresponding DSP code in order to play multimedia content.

The controller 160 generates the codec-request message if the codec library playing the multimedia content does not exist in the multimedia player 100, and transmits the codec-request message to the codec server in the external network.

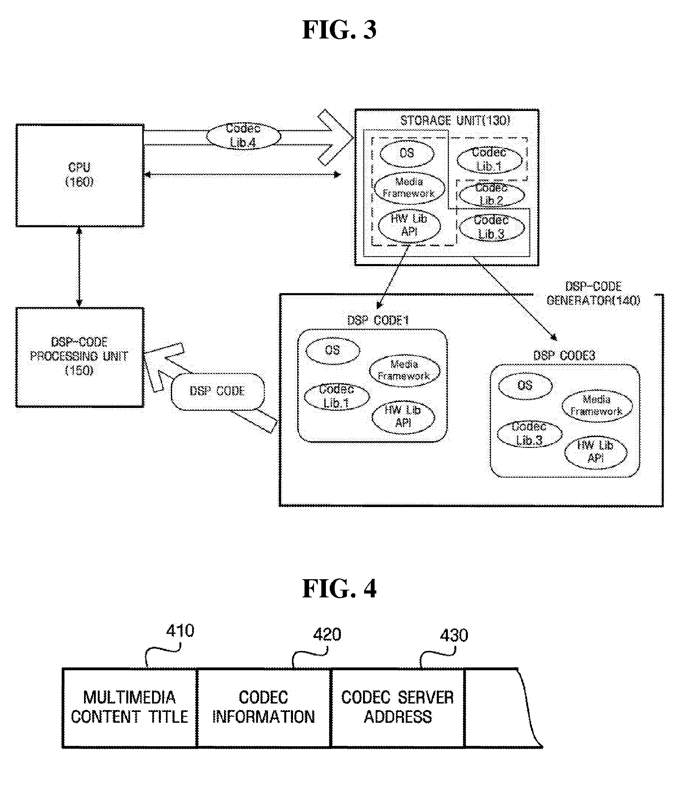

In addition, the controller 160 obtains information on a codec with respect to the multimedia content executed in the multimedia player 100 via a data packet transmitted from a multimedia content provider, and requests the DSP-code generator 140 for DSP code playing the corresponding DSP code when the multimedia content is requested to be played. Hereinafter, a data packet will be described with reference to FIG. 4.

The controller 160 also controls functional blocks 110 through 150 composing the multimedia player 100.

FIG. 3 illustrates an apparatus for generating DSP code by combining software modules according to an embodiment of the present invention.

Referring to FIG. 3, a storage unit 130 stores each software module (e.g. an OS, a codec library, a media framework, and a hardware library).

As a user request to play a multimedia content, a controller 160 requests for DSP code required in executing multimedia content and a DSP-code generator 140 combines software modules stored in a storage unit 130, and generates DSP code.

For example, when MPEG-2 codec (e.g., a codec library 1) is required to play the multimedia content, the DSP-code generator 140 uses a combination of the OS, the codec library, the media framework among software modules stored in the storage unit 130, and the hardware library, and generate DSP code for an MPEG-2 codec.

Then, the DSP-codec generator 140 loads the generated DSP code for the MPEG-2 decoding and the DSP-processing unit 150 decodes the loaded DSP code for MPEG-2 decoding, and executes the multimedia content.

However, when the MPEG-2 codec is not stored in the storage unit 130, the controller 160 generates a codec-request message requesting for a corresponding codec library (e.g., the MPEG-2 library), and transmits the message to the codec server in the external network.

Once the library (e.g., a library 4) has been transmitted from the codec server, the controller 160 stores the codec library (e.g., the codec library 4) in the storage unit 130 and the DSP-code generator generates the corresponding DSP code using the downloaded codec library.

FIG. 4 illustrates a data packet that receives codec information on multimedia content in an apparatus for generating DSP code using a combination of software modules according to another exemplary embodiment of the present invention.

Referring to FIG. 4, the data packet transmitted from the multimedia content provider includes a multimedia content title 410, codec information 420 including a codec name and additional information (e.g., the compression rate of the codec and version information), a codec server address 430 that can download the corresponding codec.

Therefore, the codec information on the multimedia content executed in a multimedia player 100 can be determined via the data packet. When multimedia content is selected by a user, DSP code composed of a codec library that can executed the corresponding multimedia content is provided.

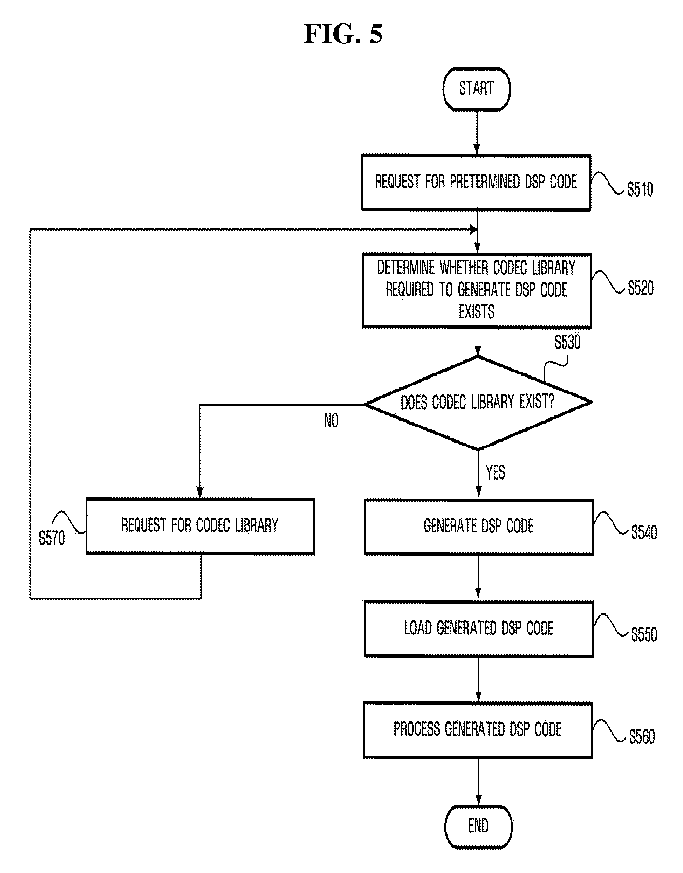

FIG. 5 is a flow chart illustrating a method of generating DSP code using a combination of software modules according to another exemplary embodiment of the present invention. Here, it is assumed that a software module OS, media framework, and a hardware library are stored in a storage unit 130.

First, upon receiving a request from a user to play multimedia content, a controller 160 requests DSP code (e.g. for an MPEG-2 codec) required to play the multimedia content (S510). Here, the controller 160 can obtain information on a codec that executes the multimedia content selected by the user via a data packet.

Next, a DSP-code generator 140 determines whether a corresponding codec library exists in the storage unit 130 in order to generate DSP code requested by the controller 160 (S520).

If it is determined that the corresponding codec library (e.g., the MPEG-2) exists in the storage unit 130 (S530), the DSP-code generator 140 generates the DSP code requested by the controller 160 using a combination of a codec library, an OS, a media framework, and a hardware library stored in the storage unit 130 (S540).

Then, the DSP-codec generator 140 loads the generated DSP code for the MPEG-2 (S550) and the DSP-code processing unit 150 decodes the loaded the DSP code for the MPEG-2, and executes the multimedia content (S560).

In contrast, if it is determined that the corresponding codec library (e.g. the MPEG-2 library) does not exist in the storage unit 130 (S530), the controller 160 generates a codec-request message requesting the codec library (e.g., the MPEG-2 library), and transmits the codec-request message to a codec server in an external network.

Once the corresponding codec library (e.g., the MPEG-2) has been transmitted from a codec server, a receiver 110 receives the transmitted codec library and the storage unit 130 stores the received codec library. The DEP-code generator 140 generates the corresponding DSP.

As a result, using preferred embodiments of the present invention time can be saved and a network load can be reduced by receiving only desired modules (e.g., the codec library) in software modules consisting of DSP code

As described above, according to an apparatus and method according to a preferred embodiment of the present invention for generating DSP code using a combination of software modules, the following advantageous effects may be achieved.

First, since only desired modules (e.g., a codec library) are received from a codec server in an external network and a corresponding DSP is generated using a combination of software modules, time required to download the software can be reduced by downloading only the desired software modules.

Second, since only the desired software modules are received and stored, a storage space can be efficiently used.

Third, the software module driven in the DSP can be effectively managed.

The exemplary embodiments of the present invention have been explained with reference to the accompanying drawings, but it will be apparent to those skilled in the art that various modifications and changes may be made thereto without departing from the scope and spirit of the invention. Therefore, it should be understood that the above exemplary embodiments are not restrictive but illustrative in all aspects.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for generating digital signal processor (DSP) code, the apparatus comprising:
a storage unit (130) that stores software modules;
a DSP-code generator (140) that combines the software modules stored in the storage unit, and generates DSP code executing multimedia content; and
a DSP-code processing unit (150) that decodes and processes the DSP code generated by the DSP-code generator.

2. The apparatus of claim 1, wherein the software modules comprise at least one of an OS, a codec library, a media framework, and a hardware library.

3. The apparatus of claim 1, further comprising a controller that generates a message requesting download of a software module, and transmits the message to a codec server in an external network if the software module can execute the multimedia content.

4. The apparatus of claim 3, wherein the software module transmitted from the codec server is a codec library.

5. A method of generating digital signal processor (DSP) code, the method comprising:
requesting (S510) the DSP code to play multimedia content;
determining (S520, S530) whether a codec library for playing the multimedia content exists;
generating (S540) the DSP code using a combination of the codec library and a software module if it is determined that the codec library exists; and
playing the multimedia content by decoding the generated DSP.

6. The method of claim 5, wherein the software module is at least one of an OS, a media framework, and a hardware library.

7. The method of claim 5 or claim 6, further comprising:
requesting (S570) a codec server from an external network if the codec library does not exist; and
downloading the codec library from the codec server.
